# EUROPÄISCHE PATENTSCHRIFT

(11) **EP 4 173 119 B1**
(45) Veröffentlichungstag und Bekanntmachung des Hinweises auf die Patenterteilung: **21.02.2024**
(21) Anmeldenummer: 21722826.1
(22) Anmeldetag: 29.04.2021
(51) Int. Cl.: H02K 3/12, H02K 3/28, H02K 15/085

(54) **STATOR FÜR EINE ELEKTRISCHE MASCHINE UND VERFAHREN ZUM AUFBRINGEN EINER HAIRPIN-WICKLUNG AUF EINEN STATORKÖRPER**
STATOR FOR AN ELECTRIC MACHINE AND METHOD FOR APPLYING A HAIRPIN WINDING TO A STATOR BODY
STATOR POUR MACHINE ÉLECTRIQUE ET PROCÉDÉ D'APPLICATION D'UN ENROULEMENT EN ÉPINGLE À CHEVEUX SUR UN CORPS DE STATOR

(30) Priorität: 30.06.2020 DE 102020117153
(43) Veröffentlichungstag der Anmeldung: 03.05.2023
(73) Patentinhaber: Audi AG, 85045 Ingolstadt (DE)
(72) Erfinder: WEBER, Korbinian, 85049 Ingolstadt (DE)
(86) Internationale Anmeldenummer: PCT/EP2021/061224
(87) Internationale Veröffentlichungsnummer: WO 2022/002460

(56) Entgegenhaltungen:
- US-A1- 2014 319 953
- US-A1- 2016 248 289
- US-B1- 7 005 772

## Beschreibung

Die Erfindung betrifft einen Stator gemäß dem Anspruch 1 für eine elektrische Maschine mit einem Statorkörper mit mehreren in Umfangsrichtung des Statorkörpers verteilten Nuten und einer auf den Statorkörper aufgebrachten Hairpin-Wicklung mit Leitern für mehrere Phasen, wobei die Leiter jeweils durch mehrere leitend verbundene Leiterklammern gebildet werden, die jeweils zwei Nutabschnitte aufweisen, die durch einen Verbindungsabschnitt verbunden sind, wobei ein jeweiliger Pol der jeweiligen Phase durch mehrere Nutabschnittgruppen gebildet ist, die jeweils Nutabschnitte umfassen, die in einer Nutgruppe von zueinander benachbarten Nuten in der gleichen Lage der Hairpin-Wicklung angeordnet sind, wobei die Leiterklammern, die die Nutabschnitte der jeweiligen Nutabschnittgruppe bilden, eine Leiterklammergruppe bilden, die benachbarte Pole der jeweiligen Phase verbindet, indem die Verbindungsabschnitte der Leiterklammern jeweils Nutabschnitte verbinden, die Nutabschnittgruppen benachbarter Pole der jeweiligen Phase angehören, wobei zwischen den Nutabschnitten der jeweiligen Leiterklammer in Umfangsrichtung eine Anzahl von übersprungenen Nuten liegen, die durch eine durch die Klammerform der jeweiligen Leiterklammer definierte Sprungbreite vorgegeben ist. Daneben betrifft die Erfindung eine elektrische Maschine gemäß dem Anspruch 5, ein Kraftfahrzeug gemäß dem Anspruch 6 und ein Verfahren zum Aufbringen einer Hairpin-Wicklung auf einen Statorkörper gemäß dem Anspruch 7.

Statoren für elektrische Maschinen in Hairpin-Bauweise sind bei Antriebsmaschinen, insbesondere im Kraftfahrzeugbereich, mittlerweile häufig anzutreffen. Bei dieser Fertigungstechnik wird ein Profildraht, meist ein Rechteckdraht zunächst in eine U-Form gebogen, die auch als Leiterklammer oder "Hairpin" bezeichnet werden kann. Die Schenkel dieses Hairpins werden anschließend kreisförmig angeordnet und in die Nuten eines Statorblechpakets eingesetzt. Die freien Enden der Schenkel werden auf der Rückseite des Stators im nächsten Schritt konzentrisch um die Statorachse um einen definierten Winkel verdreht, wobei alle freien Enden, die auf einem bestimmten Durchmesser, also auf einer Lage der Wicklung liegen, abwechselnd im und gegen den Uhrzeigersinn verdreht werden. Dieser Vorgang wird auch als "Twisten" bezeichnet. Freie Enden, die durch das Twisten nebeneinander zum Liegen kommen, werden verschweißt und je nach Wickelschema werden sogenannte Verschaltbrücken auf den Wickelkopf aufgesetzt und mit den freien Enden verschweißt, um die Leiterklammern zu einer Gesamtwicklung zu verschalten. Gegebenenfalls werden die freien Enden anschließend isoliert und der ganze Stator imprägniert. Diese Technik ist hoch automatisierbar und erreicht einen hohen Kupferfüllfaktor, also ein hohes Verhältnis der durch die leiterbedeckten Fläche zur Nutfläche. Daher ist sie zur Fertigung von Elektromaschinen im Automobilbereich, insbesondere zur Fertigung von Antriebsmaschinen, besonders geeignet.

Nachteilig kann bei dem beschriebenen Ansatz sein, dass für eine einmal aufgebaute Fertigung in der Regel das Wickelschema fest vorgegeben ist. Sollen jedoch beispielsweise Motoren für verschiedene Leistungs- bzw. Drehmomentklassen gefertigt werden, handelt es sich um eine übliche und wirtschaftlich günstige Lösung, diese Variation durch Variation der axialen Länge der Elektromaschine und somit des Stators zu realisieren. Um hierbei jedoch die elektrischen Randbedingungen im Rahmen eines Baukastensystems gleichzuhalten, sollte bei einer Variation der Länge des Motors die Windungszahl des Stators angepasst werden. Die übliche Hairpin-Wickeltechnik bietet kaum Möglichkeiten, die Windungszahl zu ändern, ohne für jeden Motor eine eigene Fertigung mit eigenen Halbzeugen und/oder Werkzeugen aufzubauen.

Ein Stator mit einer Hairpin-Wicklung ist aus der US 2014/319953 A1 bekannt.

Der Erfindung liegt somit die Aufgabe zugrunde, die Nachteile üblicher Hairpin-Wicklungen zu vermeiden und insbesondere die Anpassung einer Windungszahl mit einer möglichst geringen Modifikationen des Fertigungsprozesses zu ermöglichen.

Die Aufgabe wird dadurch gelöst, dass wenigstens zwei der Leiterklammergruppen der jeweiligen Phase eine voneinander unterschiedliche Variation oder Kombination der Sprungbreiten der Leiterklammern der jeweiligen Leiterklammergruppe aufweisen.

Bei üblichen Wicklungen werden für alle Pole und alle Nutgruppen der einzelnen Pole die gleichen Kombinationen bzw. Variationen von Sprungbreiten genutzt. Beispielsweise kann für alle Leiterklammen die gleiche Sprungbreite genutzt werden oder es kann für jede der Nutgruppen die gleiche Abfolge von Sprungbreiten für die einzelnen Leiterklammern verwendet werden. Hierdurch resultiert eine Hohe Symmetrie der Wicklung bzw. ein hochsymmetrischer Wickelkopf.

Im Rahmen der Erfindung wurde erkannt, dass bereits durch eine relativ geringfügige Abweichung von dieser Symmetrie, beispielsweise indem die Nutabschnittgruppen eines Pols oder zweier Pole einer jeweiligen Phase modifiziert werden, indem für wenigstens eine Leiterklammergruppe eine unterschiedliche Variation oder Kombination der Sprungbreiten als für anderen Leiterklammergruppen verwendet wird, eine deutliche Modifikation der Wicklung, also beispielsweise ein Wechsel von einer vorangehenden Parallelschaltung von Leiterabschnitten einer Phase zu einer Serienschaltung dieser Leiterabschnitte und somit beispielsweise eine Variation der Windungszahl der jeweiligen Phase erreicht werden kann. Zugleich bleiben beim erfindungsgemäßen Vorgehen die durch die Nutabschnitte der modifizierten Leiterklammergruppe belegten Nuten gleich, so dass abgesehen von der Nutzung anders geformter Leiterklammern, beispielsweise für einen oder zwei Polverbindungen einer jeweiligen Phase, das weitere Wickelschema unverändert bleiben kann. Dies ermöglicht es beispielsweise mit relativ geringem technischen Aufwand Wicklungen mit unterschiedlicher Windungszahl durch die gleiche Fertigungslage aufzubringen.

Die Nuten, die zwischen zwei Nutgruppen einer Phase liegen, tragen typischerweise Nutabschnitte von Leitern anderer Phasen. Die Sprungbreiten der Leiterklammern müssen somit so gewählt werden, dass zumindest diese Nuten übersprungen werden können. Werden beispielsweise drei Phasen und eine Größe der Nutengruppen von zwei verwendet, müssen durch eine Leiterklammer der jeweiligen Leiterklammergruppe wenigstens vier Nuten übersprungen werden, das heißt eine Leiterklammer muss wenigstens eine Sprungbreite von vier aufweisen. Die verbleibende Leiterklammer dieser Leiterklammergruppe muss in diesem Fall zusätzlich die durch Nutabschnitte der ersten Leiterklammer belegten Nuten überspringen, so dass diese eine Sprungbreite von sechs aufweisen muss. Somit ist in diesem Fall eine mögliche Kombination von Sprungbreiten eine Sprungbreite von vier und eine Sprungbreite von 6. Die zweite mögliche Kombination ist in diesem Fall eine Sprungbreite von fünf für beide Leiterklammern der jeweiligen Leiterklammergruppe. In einem erfindungsgemäßen Stator würden in diesem Fall somit unterschiedliche Leiterklammergruppen genutzt, von denen wenigstens eine die Sprungbreitenkombination vier und sechs hat und eine ausschließlich eine Sprungbreite von fünf nutzt.

Wie später noch an einem Beispiel erläutert werden wird, kann durch die erfindungsgemäße Nutzung verschiedener Variationen oder Kombinationen von Sprungbreiten erreicht werden, dass Leiterabschnitte der jeweiligen Phase, die ansonsten parallel geschaltet wären, in Serie geschaltet werden können. Hierdurch kann eine einfach implementierbare Variation der Windungszahl erreicht werden. Werden Leiterklammergruppen mit mehr als zwei Leiterklammern genutzt, stehen offensichtlich auch mehr verschiedene Variations- bzw. Kombinationsmöglichkeiten von Sprungbreiten bereit, wofür später noch einige Beispiele erläutert werden.

In vielen Wickelschemata ist einem jeweiligen Pol eine feste Nutgruppe zugeordnet, so dass der Pol durch jene Nutabschnittgruppen gebildet wird, die in dieser Nutgruppe in den verschiedenen Lagen angeordnet sind. Es sind jedoch auch Wickelschemata bekannt, bei denen einem Pol in verschiedenen Lagen verschiedene Nutgruppen zugeordnet sind, so dass die verschiedenen Nutabschnittgruppen, die die verschiedenen Lagen des Pols bilden, in Umfangsrichtung geringfügig zueinander versetzt sein können, insbesondere um eine oder zwei Nuten.

Die jeweilige Phase kann durch einen einzigen Leiter gebildet sein. Sie kann jedoch auch mehrere parallel und/oder in Serie geschaltete Leiter umfassen, die jeweils durch mehrere leitend verbundene, beispielsweise verschweißte, Leiterklammern gebildet werden.

Die Nutabschnitte verschiedener der Leiterklammern sind in den Nuten jeweils derart gestapelt, dass die Radialposition eines jeweiligen der Nutabschnitte durch seine Position in dem jeweiligen Stapel definiert ist. Als Lage werden zusammenfassend all jene Nutabschnitte bezeichnet, die in den verschiedenen Nuten an der gleichen Radialposition bzw. an der gleichen Position im jeweiligen Stapel angeordnet sind.

Bei Hairpin-Wicklungen sind die Leiterklammern typischerweise leicht schräg angeordnet, so dass die beiden Nutabschnitte einer Leiterklammer auf unterschiedlichen Lagen angeordnet sind. In der Regel werden die Leiterklammern derart angeordnet, dass jeweils zwei Lagen durch Verbindungsabschnitte der Leiterklammern verbunden sind und die Verbindung zu anderen Lagen durch leitend verbundene, beispielsweise verschweißte, freie Enden der Nutabschnitte einer oder mehrerer dieser Leiterklammern gebildet sind. Die zwei durch Verbindungsabschnitte verbundenen Lagen werden auch als Korb bezeichnet.

Die Begriffe Variation und Kombination werden hier im Sinne der Kombinatorik verwendet. Wird somit ausschließlich die Reihenfolge des Auftretens der Sprungbreiten, beispielsweise ausgehend von einer ersten der Leiterklammern im Uhrzeigersinn, variiert, handelt es sich somit um eine Permutation oder allgemein um eine Variation der Sprungbreiten. Umfasst die jeweilige Leiterklammergruppe beispielsweise drei Leiterklammern und werden drei Phasen genutzt, so ist typischerweise eine durchschnittliche Sprungbreite von acht erforderlich. Als unterschiedliche Permutationen bzw. Variationen können somit einerseits die Sprungbreiten neun, sieben und acht und andererseits die Sprungbreiten acht, neun und sieben verwendet werden. Bei einer Kombination ist die Reihenfolge unbeachtlich, so dass es sich bei den beiden vorangehend genannten Variationen bzw. Permutationen um die gleiche Kombination von Sprungbreiten handeln würde. Somit könnte als unterschiedliche Kombinationen von Sprungbreiten einerseits die Sprungbreiten von neun, neun und sechs und andererseits die Sprungbreiten von zehn, acht und sechs verwendet werden. Bei diesen unterschiedlichen Kombinationen handelt es sich auch um unterschiedliche Variationen, jedoch nicht um unterschiedliche Permutationen, da unterschiedliche Elemente verwendet werden.

Bezüglich der Anzahl der möglichen Variationen kann für die erste der Leiterklammern einer Leiterklammergruppe, beispielsweise jene der Leiterklammern, die im ersten Pol die erste Nut der Nutgruppe belegt, die Nut in der Nutgruppe des zweiten Pols frei gewählt werden. Somit ergeben sich für die Sprungbreite der ersten Leiterklammer bei einer Gruppengröße n der Leiterklammergruppe n Möglichkeiten. Für die zweite Leiterklammer ergeben sich n-1 Möglichkeiten, für die dritte Leiterklammer, so vorhanden, n-3 Möglichkeiten usw. Für eine Leiterklammergruppen mit n Leiterklammern ergeben sich somit n! Variationsmöglichkeiten. Beispielsweise ergeben sich für eine Gruppengröße von zwei Leiterklammern genau zwei Möglichkeiten, für eine Gruppengröße von drei Leiterklammern sechs Möglichkeiten und für eine Gruppengröße von vier Leiterklammern 24 Möglichkeiten. Die Größe der Leiterklammergruppe entspricht der Größe der jeweiligen Nutgruppe und wird auch als Lochzahl bezeichnet.

Wenigstens ein Leiter wenigstens einer Phase kann innerhalb eines durch zwei Lagen der Hairpin-Wicklung gebildeten Korbs der Haipin-Wicklung in Umfangsrichtung des Stators zweimal in die gleiche Richtung um eine Mittelachse des Stators geführt sein. Insbesondere kann der Leiter in jedem der Körbe, also in jedem Paar von benachbarten, durch Verbindungsabschnitte verbundenen Lagen, zweimal in die gleiche Richtung um die Mittelachse des Stators geführt sein.

Bei üblichen Wickelschemata erfolgt nach einem Umlauf ein Wechsel in einen anderen Korb. Wird nun eine Wicklung genutzt, bei der durch die Leiterklammern mehrere parallele Leiter einer Phase ausgebildet werden, wird diese Wicklung, wie später noch an Beispielen erläutert werden wird, durch Nutzung einer anderen Variation oder Kombination von Sprungbreiten für einen bestimmten Polverbindung oder mehrere Poleverbindungen derart modifiziert, dass die Wicklung mehrfach um die Mittelachse des Stators geführt wird, womit durch die erfindungsgemäße Variation ein Wechsel von parallel geschalteten zu in Serie geschalteten Leiterabschnitten mit geringem Aufwand möglich ist.

Ausschließlich jene ausgewählten Leiterklammergruppen, die genau zwei oder genau drei der Pole der jeweiligen Phase verbinden, können eine andere Variation oder Kombination der Sprungbreiten aufweisen als die anderen der Leiterklammergruppen der Phase. Hierdurch wird die an sich erstrebenswerte Symmetrie der Wicklung weitgehend erhalten und es erfolgt nur lokal eine geringfügige Abweichung, um die gewünschte Beschaltungsvariation zu erreichen.

Alle Leiterklammern der ausgewählten Leiterklammergruppen können die gleiche Sprungbreite aufweisen und die Sprungbreiten jeweils zweier Leiterklammern der anderen Leiterklammergruppen können sich um zwei unterscheiden oder umgekehrt. Ist somit für die Leiterklammern der Leiterklammergruppe beispielsweise eine durchschnittliche Sprungbreite von n erforderlich, so können für die ausgewählten Leiterklammergruppen alle Leiterklammern die Sprungbreite n aufweisen und für die anderen Leiterklammergruppen kann eine der Leiterklammern die Sprungbreite n+1 und eine der Leiterklammern die Sprungbreite n-1 aufweisen. Falls mehr als zwei Leiterklammern in der jeweiligen Leiterklammergruppe enthalten sind, können die verbleibenden Leiterklammern wiederum die Sprungbreite n aufweisen. Dies führt dazu, dass durch die andere Kombination der Sprungbreiten für die ausgewählten Leiterklammergruppen effektiv gegenüber einer Wicklung, bei der eine solche Modifikation nicht stattfinden würde, die Positionen von zwei Nutabschnitten in der jeweiligen Nutgruppe vertauscht sind, wodurch beispielsweise ermöglicht werden kann, ohne diese Modifikation parallel geschaltete Stränge in Serie zu schalten oder ähnliches.

In Fällen, in denen die jeweilige Leiterklammergruppe jeweils wenigstens drei Leiterklammern umfasst, können sich die Sprungbreiten zweier Leiterklammern der ausgewählten Leiterklammergruppe um vier oder mehr unterscheiden und die Sprungbreiten der Leiterklammern der anderen Leiterklammergruppen können sich um maximal drei unterscheiden oder umgekehrt. Werden beispielsweise drei Leiterklammern pro Leiterklammergruppe und drei Phasen genutzt, kann die durchschnittliche Sprungbreite der Leiterklammergruppen gleich acht sein. Für die ausgewählten Leiterklammergruppen können in diesem Fall beispielsweise Sprungbreiten von zehn, acht und sechs verwendet werden, während für die anderen Leiterklammergruppen Sprungbreiten von neun, neun und sechs verwendet werden können. Ähnlich wie obig erläutert wird durch die andere Variation bzw. Kombination erreicht, dass die Nutabschnitte in einer bestimmten Nutgruppe in einer anderen Reihenfolge angeordnet werden und somit Leiterklammern unterschiedlich verschaltet werden können, um beispielsweise von einer Parallelschaltung von Leiterabschnitten zu einer Serienschaltung zu wechseln.

Neben dem erfindungsgemäßen Stator betrifft die Erfindung eine elektrische Maschine, die einen erfindungsgemäßen Stator umfasst.

Zudem betrifft die Erfindung ein Kraftfahrzeug, das eine erfindungsgemäße elektrische Maschine, insbesondere als Antriebsmotor, umfasst.

Die Erfindung betrifft zudem ein Verfahren zum Aufbringen einer Hairpin-Wicklung auf einen Statorkörper mit Leitern für mehrere Phasen im Rahmen der Herstellung einer elektrischen Maschine, umfassend die Schritte:
- Bereitstellen eines Statorkörpers mit mehreren in Umfangsrichtung des Statorkörpers verteilten Nuten und von mehreren Leiterklammern, die jeweils zwei Nutabschnitte aufweisen, die durch einen Verbindungsabschnitt verbunden sind, wobei wenigstens zwei der Leiterklammern eine voneinander unterschiedliche Klammerform aufweisen,
- axiales Einführen der Nutabschnitte in die Nuten derart, dass ein jeweiliger Pol der jeweiligen Phase durch mehrere Nutabschnittgruppen gebildet wird, die Nutabschnitte umfasst, die in einer Nutgruppe von zueinander benachbarten Nuten in der gleichen Lage der Haipin-Wicklung angeordnet sind, wobei die Leiterklammern, die die Nutabschnitte der jeweiligen Nutabschnittgruppe bilden, eine Leiterklammergruppe bilden, die benachbarte Pole der jeweiligen Phase verbindet, indem die Verbindungsabschnitte der Leiterklammern jeweils Nutabschnitte verbinden, die Nutabschnittgruppen benachbarter Pole der jeweiligen Phase angehören, wobei zwischen den Nutabschnitten der jeweiligen Leiterklammer in Umfangsrichtung eine Anzahl von übersprungenen Nuten liegen, die durch eine durch die Klammerform der jeweiligen Leiterklammer definierte Sprungbreite vorgegeben ist, wobei für wenigstens zwei der Leiterklammergruppen der jeweiligen Phase eine voneinander unterschiedliche Variation oder Kombination der Sprungbreiten der Leiterklammern der jeweiligen Leiterklammergruppe verwendet wird, und
- leitendes Verbinden der Leiterklammern zur Ausbildung des wenigstens einen Leiters der jeweiligen Phase, sodass wenigstens ein Leiter wenigstens einer Phase innerhalb eines durch zwei Lagen der Hairpin-Wicklung gebildeten Korbes der Hairpin-Wicklung in Umfangsrichtung des Stators zweimal in die gleiche Richtung um eine Mittelachse des Stators geführt ist.

Das erfindungsgemäße Verfahren kann insbesondere zur Herstellung eines erfindungsgemäßen Stators dienen bzw. im Rahmen der Herstellung eines erfindungsgemäßen Stators zum Aufbringen der Hairpin-Wicklung auf den Statorkörper verwendet werden. Zum erfindungsgemäßen Stator erläuterte Merkmale lassen sich mit den genannten Vorteilen auf das erfindungsgemäße Verfahren übertragen und umgekehrt.

Die Verfahrensschritte können insbesondere nach dem Aufbringen einer ersten Hairpin-Wicklung auf einen ersten Statorkörper zum Aufbringen einer zweiten Hairpin-Wicklung auf einen zweiten Statorkörper wiederholt werden, wobei jedoch der Schritt des axialen Einführens der Nutabschnitte in die Nut zum Aufbringen der weiteren Hairpin-Wicklung derart modifiziert wird, dass für wenigstens eine der Leiterklammergruppen der jeweiligen Phase eine andere Variation oder Kombination von Sprungbreiten verwendet wird als sie für die erste Hairpin-Wicklung verwendet wird und/oder dass für alle Leiterklammergruppen der jeweiligen Phase in der weiteren Hairpin-Wicklung die gleiche Variation oder Kombination von Sprungbreiten verwendet wird.

Wie bereits zum erfindungsgemäßen Stator erläutert wird somit erreicht, dass in der ersten Hairpin-Wicklung die Wicklung in Umfangsrichtung des Stators innerhalb eines Korbes zweimal in die gleiche Richtung um die Mittelachse des Stators geführt wird, während in der zweiten Hairpin-Wicklung stattdessen zwei Leiterabschnitte resultieren, die innerhalb des Korbes nur einmal in Umfangsrichtung des Stators in die gleiche Richtung um die Mittelachse des Stators geführt sind, bevor die jeweilige Leiter in einen anderen Korb wechseln. Allgemein ausgedrückt resultiert durch das beschriebene Vorgehen insbesondere bei einem Herstellungsverfahren, das abgesehen von dieser kleinen Modifikation gleich ist, eine andere Windungszahl für die erste und zweite Hairpin-Wicklung. Somit resultiert ein erheblicher Flexibilitätsgewinn bei der Herstellung eines Stators.

Der erste und zweite Statorkörper können unterschiedliche Längen in Axialrichtung des Stators aufweisen. Wie bereits eingangs erläutert werden unterschiedliche Längen der elektrischen Maschine und somit auch des Statorkörpers genutzt, um in einem Baukastensystem, beispielsweise in einer Bauserie eines Kraftfahrzeugs, unterschiedliche Leistungen bzw. Drehmomente bereitstellen zu können. Die unterschiedliche Ausgestaltung der ersten und zweiten Hairpin-Wicklung ermöglicht die Anpassung der Windungszahl zur Anpassung an die elektrischen Randbedingungen, so dass der bewickelte erste und zweite Statorkörper bzw. diesen umfassende elektrische Maschine ohne aufwändige Anpassung der umgebenden Elektronen beispielsweise in der gleichen Fahrzeugserie genutzt werden können.

Weitere Vorteile und Einzelheiten der Erfindung zeigen die folgenden Ausführungsbeispiele sowie die zugehörigen Zeichnungen. Hierbei zeigen schematisch:
- Fig. 1: eine Detailansicht eines Ausführungsbeispiels eines erfindungsgemäßen Stators, der durch ein Ausführungsbeispiel des erfindungsgemäßen Verfahrens herstellbar ist,
- Fig. 2: einen Ausschnitt des Wickelschemas für den in Fig. 1 gezeigten Stator,
- Fig. 3 und 4: Ausschnitte der Wickelschemata für zwei Leiter in einem weiteren Ausführungsbeispiel eines erfindungsgemäßen Stators, und
- Fig. 5: ein Ausführungsbeispiel eines erfindungsgemäßen Kraftfahrzeugs, das ein Ausführungsbeispiel einer erfindungsgemäßen elektrischen Maschine umfasst.

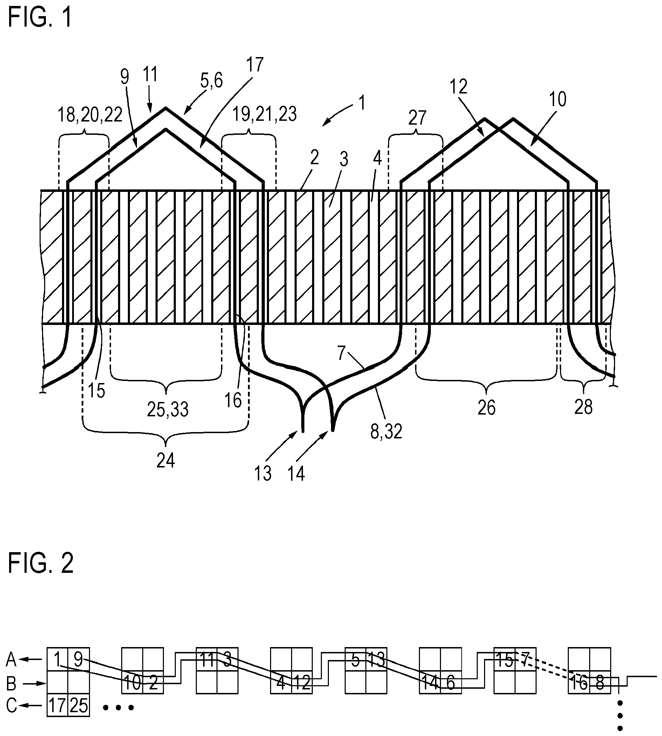

Fig. 1 zeigt eine Detailansicht eines Stators 1 für eine elektrische Maschine mit einem Statorkörper 2 und einer darauf aufgebrachten Hairpin-Wicklung 5. Der zylinderförmige Stator 2 ist in Fig. 1 ausschnittsweise aufgerollt dargestellt, so dass sich in Querrichtung in Fig. 1 in Radialrichtung von dem Statorkörper 2 abragende Statorzähne 3 und zwischen diesen befindliche Nuten 4 abwechseln. Aus Übersichtlichkeitsgründen sind in Fig. 1 nur zwei Leiterabschnitte 7, 8 einer Phase 6 dargestellt, die, wie später noch mit Bezug auf Fig. 2 erläutert werden wird, in Serie geschaltet sind. Weitere Leiter bzw. Phasen sind zwar vorhanden, aber nicht dargestellt.

Der Leiter 32 bzw. die Leiterabschnitte 7, 8 werden jeweils durch mehrere leitend verbundene Leiterklammern 9 bis 12 gebildet. Wie am Beispiel der Leiterklammer 9 dargestellt ist, umfassen die jeweilige Leiterklammer 9 bis 12 zwei Nutabschnitte 15, 16, die durch eine jeweilige Nut 4 des Statorkörpers 2 geführt sind, und einen Verbindungsabschnitt 17, der die Nutabschnitte 15, 16 verbindet. Im Rahmen des Aufbringens der Hairpin-Wicklung sind die Nutabschnitte 15, 16 zunächst gerade, so dass die Leiterklammern 9 bis 12 axial in den Statorkörper 2 eingesetzt werden können. Nach dem Einsetzen werden die freien Enden der Leiterklammern 9 bis 12 zunächst geboten, wobei alle freien Enden auf einer Lage stets in die gleiche Richtung gebogen werden und freie Enden auf benachbarten Lagen in unterschiedliche Richtungen gebogen werden. Anschließend werden die freien Enden, wie schematisch an den Verbindungspunkten 13, 14 dargestellt ist, leitend verbunden, beispielsweise verschweißt.

Die verschiedenen Pole 22, 23, 27, 28 der jeweiligen Phase 6 werden jeweils durch mehrere Nutabschnittgruppen 20, 21 gebildet, wobei die jeweilige Nutabschnittgruppe 20, 21 jeweils Nutabschnitte 15, 16 umfasst, die in der gleichen Lage der Hairpin-Wicklung 5 in einer bestimmten Nutgruppe 18, 19 der Nuten 4 angeordnet sind. Wie in Fig. 1 zu erkennen ist, verbinden die Verbindungsabschnitte 17 der jeweiligen Leiterklammern 9 bis 12 hierbei jeweils Nutabschnitte 15, 16 unterschiedlicher Nutabschnittgruppen 20, 21 bzw. unterschiedlicher Pole 22, 23, 27, 28. Die zwischen den Nutgruppen 18, 19 liegenden Nuten 33 können Nutabschnitte zur Ausbildung anderer Phasen aufnehmen.

Durch die Form der jeweiligen Leiterklammer 9 bis 12 wird jeweils eine Sprungbreite 24, 25, 26 vorgegeben, die die Anzahl der übersprungenen Nuten zwischen den Nutabschnitten 15, 16 der jeweiligen Leiterklammer 9 bis 12 angibt. Somit ist die Sprungbreite für die Leiterklammer 9 vier, für die Leiterklammer 11 sechs und für die Leiterklammern 10, 12 jeweils fünf. Jene Leiterklammern 9 und 11 bzw. 10 und 12, die benachbarte Pole, also die Pole 22 und 23 bzw. 27 und 28 verbinden, werden als Leiterklammergruppe betrachtet. Wesentliches Merkmal des Stators 1 ist es, dass die die Leiterklammern 9, 11 umfassende Leiterklammergruppe eine andere Kombination von Sprungbreiten, nämlich die Sprungbreiten 4 und 6, aufweist, als die Leiterklammergruppe, die die Leiterklammern 10 und 11 umfasst. Hierdurch wird, wie im Folgenden mit Bezug auf Fig. 2 erläutert werden wird, ermöglicht, die Leiterabschnitte 7, 8 in Serie zu schalten, um den Leiter 32 auszubilden.

Fig. 2 zeigt eine Detailansicht eines Wicklungsschema des Stators 1, wobei ausschließlich das Schema für die Lagen A und B, also die äußersten zwei Wicklungslagen bzw. den äußersten Korb der Wicklung, für den Leiter 32 dargestellt ist. Die in den Kästchen angegebenen Zahlen nummerieren jeweils die Nutabschnitte ausgehend von dem Phasenanschluss, der mit eins gekennzeichnet ist, in ihrer Reihenfolge, in der sie miteinander verbunden sind. Gerade Linien zwischen Kästchen bzw. Zahlen zeigen hierbei eine Verbindung über Verbindungsabschnitte 17 auf der Biegeseite und gestufte Verbindungen eine Verbindung über Schweißverbindungen oder Ähnliches auf der Schweißseite an. Eine jeweilige Spalte stellt eine jeweilige Nut dar und eine jeweilige Zeile eine Lage. Hierbei sind nur Kästchen für die durch Nutabschnitte der einer Phase belegte Nuten dargestellt und die Nuten, die Leiter anderer Phasen aufnehmen sind abstrakt als horizontale Lücken dargestellt. Die leer dargestellten Kästchen führen einen zweiten Leiter der gleichen Phase, der das gleiche Wickelschema nutzt. In den nicht bzw. nur teilweise dargestellten Lagen C bis F wird das gleiche Wickelschema fortgesetzt.

Für die Leiterklammern bzw. Verbindungsabschnitte wird, abgesehen von den gestrichelt dargestellten Leiterklammern bzw. Verbindungsabschnitten, durchgehend eine Kombination von einer Sprungbreite von vier für eine innere Leiterklammer und einer Sprungbreite von sechs für eine äußere Leiterklammer verwendet. Für die beiden gestrichelt dargestellten Leiterklammern bzw. Verbindungsabschnitte wird eine Sprungbreite von fünf genutzt. Dies führt dazu, dass bei einem üblichen Twistvorgang die freien Enden des Nutabschnitts 8 in der Lage B und des Nutabschnitts 9 in der Lage A benachbart zueinander zum Liegen kommen und somit leitend verbunden werden können, um den Leiterabschnitt, der die Nutabschnitte 1 bis 8 umfasst, mit dem Leiterabschnitt, der die Nutabschnitte 9 bis 16 umfasst, leitend zu verbinden. Hierdurch wird erreicht, dass der resultierende Leiter innerhalb des durch die beiden Lagen A und B gebildeten Korbs der Wicklung in Umfangsrichtung des Stators zweimal in die gleiche Richtung um die Mittelachse des Stators geführt wird. Nach Erreichen des Nutabschnitts 16 wird der Leiter wie üblich in einen weiteren Korb, nämlich in die Lage C geführt, indem der Nutabschnitt 16 mit dem Nutabschnitt 17 leitend verbunden wird.

Würde das in Fig. 2 dargestellte Wickelschema so modifiziert, dass auch für die gestrichelt dargestellten Verbindungsabschnitte bzw. Leiterklammern die gleiche Kombination von Sprungbreiten verwendet würde wie für die anderen zwischen zwei Polen genutzten Leiterklammergruppen, also im Beispiel die Sprungbreiten sechs und vier, so würde dies dazu führen, dass die in Fig. 2 mit 8 und 16 bezeichneten Nutabschnitte vertauscht wären. Dies würde aufgrund der festen Sprungbreite auf der Schweißseite aufgrund des Twistvorgangs dazu führen, dass das freie Ende des achten Nutabschnitts benachbart zu dem freien Ende des in Fig. 2 mit 17 bezeichneten Nutabschnitts in der Lage C zum Liegen kommen würde und somit der Leiter unmittelbar nach einem Umlauf um die Mittelachse des Stators in den nächsten Korb, also in die Lage C, geführt würde. Der zweite Leiterabschnitt, der in Fig. 2 die Nutabschnitte 9 bis 16 umfasst, würde in diesem Fall ebenfalls unmittelbar in den zweiten Korb geführt, so dass statt einer Serienschaltung dieser Leiterabschnitte die Leiterabschnitte Teil von parallel geführten Leitern wären.

Anders ausgedrückt kann durch Wahl der Kombination der Sprungbreiten für die gestrichelt dargestellten Leiterklammern wahlweise eine längere einzelne Windung oder zwei parallele Windungen realisiert werden. Somit ist im Rahmen der Herstellung mit geringem Aufwand eine Modifikation der Windungszahl möglich, die beispielsweise genutzt werden kann, verschieden lange Statoren an elektrische Randbedingungen eines Systems, in dem sie genutzt werden sollen, anzupassen.

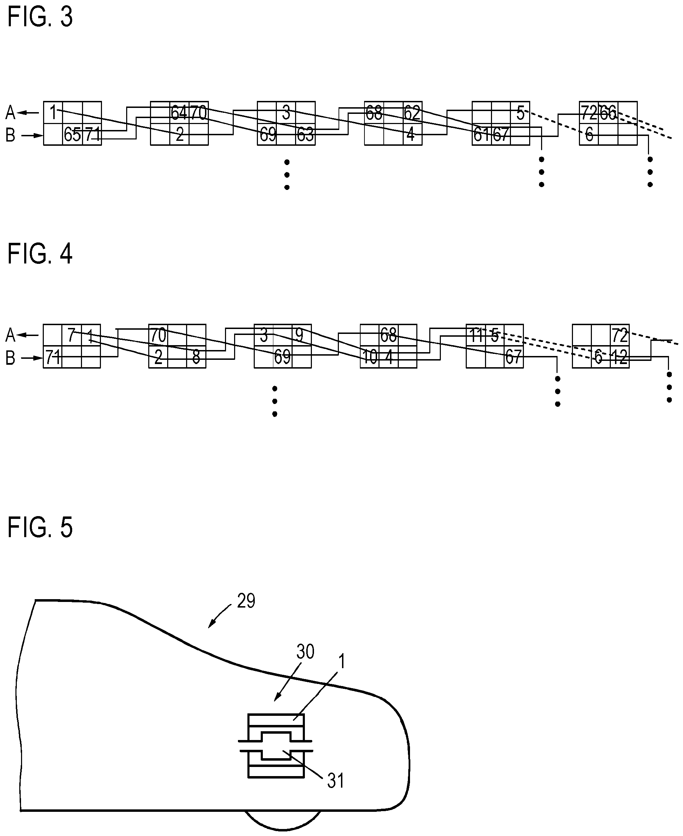

Fig. 3 und 4 zeigen Ausschnitte des Wicklungsschemas für zwei Leiter der gleichen Phase einer weiteren elektrischen Maschine. Allgemein gilt bezüglich der gewählten Darstellung des Wickelschemas das zu Fig. 2 gesagte. Wie bereits in Fig. 2 geben die Ziffern in den Kästchen hierbei an, um den wievielten Nutabschnitt ausgehend von einem Phasenanschluss es sich handelt. Hierbei wird sowohl in Fig. 3 als auch in Fig. 4 der jeweilige Leiter von der Lage A bis zu einer nicht gezeigten Lage F und von dort wieder zurück auf die Lage A geführt, so dass in der Lage A auch der Nutabschnitt 72 liegt, der am weitesten vom Phasenanschluss entfernt ist und beispielsweise mit einem Massepotential oder einem Sternpunkt verbunden sein kann. Aufgrund dieser Ausgestaltung sind die drei Leiterklammern einer jeweiligen Leiterklammergruppe, die zwei der Pole verbinden, auf die beiden Leiter verteilt, so dass zur Diskussion der genutzten Kombinationen von Sprungbreiten beide Figuren gemeinsam betrachtet werden sollten.

Alle Leiterklammerkombinationen, die jeweils zwei Pole verbinden, abgesehen von den gestrichelt dargestellten, drei Pole verbindenden Leiterklammern, weisen im Beispiel eine Kombination von Sprungbreiten von neun, neun und sechs auf. Die beiden gestrichelt dargestellten Leiterklammergruppen weisen eine Kombination von Sprungbreiten von zehn, acht und sechs auf. Hierdurch wird in Fig. 1 erreicht, dass der sich von dem Nutabschnitt 61 bis zu dem Nutabschnitt 72 erstreckende Leiterabschnitt bzw. in Fig. 4 der sich von dem Nutabschnitt 1 zu dem Nutabschnitt 12 erstreckende Leiterabschnitte jeweils zweimal in die gleiche Richtung um die Mittelachse des Stators geführt werden.

Würden auch für die gestrichelt dargestellten Leiterklammern die gleichen Kombinationen von Sprungbreiten genutzt, wie für die anderen Leiterklammern, würden stattdessen drei parallele Leiter resultieren, die innerhalb eines jeweiligen Korbes nur einmal in Umfangsrichtung um die Mittelachse des Stators geführt sind. Somit kann ähnlich wie in dem bereits mit Fig. 1 und 2 diskutierten Ausführungsbeispiel durch Nutzung einer unterschiedlichen Variation oder Kombination der Sprungbreiten wenigstens zweier Leiterklammergruppen eine andere Windungszahl erreicht werden, als wenn für alle Leiterklammergruppen die gleiche Kombination von Sprungbreiten verwendet wird. Entsprechend kann die Windungszahl mit geringem technischen Aufwand angepasst werden.

Fig. 4 zeigt ein Ausführungsbeispiel eines Kraftfahrzeugs 29, das eine elektrische Maschine 30 umfasst, die durch einen der vorangehend erläuterten Statoren 1 und einen Rotor 31 gebildet ist. Die elektrische Maschine 30 kann insbesondere ein Antriebsmotor eines Elektrofahrzeugs oder Hybridfahrzeugs sein.

## Patentansprüche

1. Stator für eine elektrische Maschine (30) mit einem Statorkörper (2) mit mehreren in Umfangsrichtung des Statorkörpers (2) verteilten Nuten (4) und einer auf den Statorkörper(2) aufgebrachten Hairpin-Wicklung (5) mit Leitern (32) für mehrere Phasen (6), wobei die Leiter (32) jeweils durch mehrere leitend verbundene Leiterklammern (9 - 12) gebildet werden, die jeweils zwei Nutabschnitte (15, 16) aufweisen, die durch einen Verbindungsabschnitt (17) verbunden sind, wobei ein jeweiliger Pol (22, 23, 27, 28) der jeweiligen Phase (6) durch mehrere Nutabschnittgruppen (20, 21) gebildet ist, die jeweils Nutabschnitte (15, 16) umfassen, die in einer Nutgruppe (18, 19) von zueinander benachbarten Nuten (4) in der gleichen Lage der Hairpin-Wicklung (5) angeordnet sind, wobei die Leiterklammern (9 - 12), die die Nutabschnitte (15, 16) der jeweiligen Nutabschnittgruppe (20, 21) bilden, eine Leiterklammergruppe bilden, die benachbarte Pole (22, 23, 27, 28) der jeweiligen Phase (6) verbindet, indem die Verbindungsabschnitte (17) der Leiterklammern (9 - 12) jeweils Nutabschnitte (15, 16) verbinden, die Nutabschnittgruppen (20. 21) benachbarter Pole (22, 23, 27, 28) der jeweiligen Phase (6) angehören, wobei zwischen den Nutabschnitten (15, 16) der jeweiligen Leiterklammer (9 - 12) in Umfangsrichtung eine Anzahl von übersprungenen Nuten (4) liegen, die durch eine durch die Klammerform der jeweiligen Leiterklammer (9 - 12) definierte Sprungbreite (24 - 26) vorgegeben ist, wobei wenigstens zwei der Leiterklammergruppen der jeweiligen Phase (6) eine voneinander unterschiedliche Variation oder Kombination der Sprungbreiten (24, 25, 26) der Leiterklammern (9 - 12) der jeweiligen Leiterklammergruppe aufweisen,
**dadurch gekennzeichnet,**
**dass** wenigstens ein Leiter (32) wenigstens einer Phase innerhalb eines durch zwei Lagen (A, B) der Hairpin-Wicklung (5) gebildeten Korbes der Hairpin-Wicklung (5) in Umfangsrichtung des Stators (1) zweimal in die gleiche Richtung um eine Mittelachse des Stators (1) geführt ist.

2. Stator nach Anspruch 1,
**dadurch gekennzeichnet,**
**dass** ausschließlich jene ausgewählten Leiterklammergruppen, die genau zwei oder genau drei der Pole (20, 21, 27, 28) der jeweiligen Phase (6) verbinden, eine andere Variation oder Kombination von Sprungbreiten (24 - 26) aufweisen als die anderen der Leiterklammergruppen dieser Phase (6).

3. Stator nach Anspruch 2,
**dadurch gekennzeichnet,**
**dass** alle Leiterklammern (10, 12) der ausgewählten Leiterklammergruppen die gleiche Sprungbreite (26) aufweisen und sich die Sprungbreiten (24, 25) jeweils zweier Leiterklammern (9, 11) der anderen Leiterklammergruppen um zwei unterscheiden oder umgekehrt.

4. Stator nach Anspruch 2, wobei die jeweilige Leiterklammergruppe jeweils wenigstens drei Leiterklammern (9 - 12) umfasst,
**dadurch gekennzeichnet,**
**dass** sich die Sprungbreite (24 - 26) zweier Leiterklammern (9 - 12) der ausgewählten Leiterklammergruppen um vier oder mehr unterscheidet und sich die Sprungbreiten (24 - 26) der Leiterklammern (9 - 12) der anderen Leiterklammergruppen um maximal drei unterscheiden oder umgekehrt.

5. Elektrische Maschine, insbesondere Antriebsmotor für ein Kraftfahrzeug (29),
**dadurch gekennzeichnet,**
**dass** sie einen Stator (1) nach einem der vorangehenden Ansprüche umfasst.

6. Kraftfahrzeug,
durch gekennzeichnet,
dass es eine elektrische Maschinen (30) nach Anspruch 5 umfasst.

7. Verfahren zum Aufbringen einer Hairpin-Wicklung (5) auf einen Statorkörper (2) mit Leitern (32) für mehrere Phasen (6) im Rahmen der Herstellung einer elektrischen Maschine (30), umfassend die Schritte:
- Bereitstellen eines Statorkörpers (2) mit mehreren in Umfangsrichtung des Statorkörpers (2) verteilten Nuten (4) und von mehreren Leiterklammern (9 - 12), die jeweils zwei Nutabschnitte (15, 16) aufweisen, die durch einen Verbindungsabschnitt (17) verbunden sind, wobei wenigstens zwei der Leiterklammern (9 - 12) eine voneinander unterschiedliche Klammerform aufweisen,
- axiales Einführen der Nutabschnitte (15, 16) in die Nuten (4) derart, dass ein jeweiliger Pol (22, 23, 27, 28) der jeweiligen Phase (6) durch mehrere Nutabschnittgruppen (20, 21) gebildet wird, die Nutabschnitte (15, 16) umfasst, die in einer Nutgruppe (18, 19) von zueinander benachbarten Nuten (4) in der gleichen Lage der Hairpin-Wicklung (5) angeordnet sind, wobei die Leiterklammern (9 - 12), die die Nutabschnitte (15, 16) der jeweiligen Nutabschnittgruppe (20, 21) bilden, eine Leiterklammergruppe bilden, die benachbarte Pole (22, 23, 27, 28) der jeweiligen Phase (6) verbindet, indem die Verbindungsabschnitte (17) der Leiterklammern (9 - 12) jeweils Nutabschnitte (15, 16) verbinden, die Nutabschnittgruppen (20, 21) benachbarter Pole (22, 23, 27, 28) der jeweiligen Phase (6) angehören, wobei zwischen den Nutabschnitten (15, 16) der jeweiligen Leiterklammer (9 - 12) in Umfangsrichtung eine Anzahl von übersprungenen Nuten (4) liegen, die durch eine durch die Klammerform der jeweiligen Leiterklammer (9 - 12) definierte Sprungbreite (24 - 26) vorgegeben ist, wobei für wenigstens zwei der Leiterklammergruppen der jeweiligen Phase (6) eine voneinander unterschiedliche Variation oder Kombination der Sprungbreiten (24 - 26) der Leiterklammern (9 - 12) der jeweiligen Leiterklammergruppe verwendet wird, und
- leitendes Verbinden der Leiterklammern (9 - 12) zur Ausbildung des wenigstens einen Leiters (32) der jeweiligen Phase (6), sodass wenigstens ein Leiter (32) wenigstens einer Phase innerhalb eines durch zwei Lagen (A, B) der Hairpin-Wicklung (5) gebildeten Korbes der Hairpin-Wicklung (5) in Umfangsrichtung des Stators (1) zweimal in die gleiche Richtung um eine Mittelachse des Stators (1) geführt ist.

8. Verfahren nach Anspruch 7,
**dadurch gekennzeichnet,**
**dass** die Verfahrensschritte nach dem Aufbringen einer ersten Hairpin-Wicklung (5) auf einen ersten Statorkörper (2) zum Aufbringen einer zweiten Hairpin-Wicklung auf einen zweiten Statorkörper wiederholt werden, wobei jedoch der Schritt des axiales Einführens der Nutabschnitte (15, 16) in die Nuten (4) zum Aufbringen der zweiten Hairpin-Wicklung derart modifiziert wird, dass für wenigstens eine der Leiterklammergruppen der jeweiligen Phase (6) eine andere Variation oder Kombination von Sprungbreiten (24 - 26) verwendet wird als sie für die erste Hairpin-Wicklung (5) verwendet wird und/oder dass für alle Leiterklammergruppen der jeweiligen Phase (6) in der weiteren Hairpin-Wicklung die gleiche Variation oder Kombination von Sprungbreiten (24 - 26) verwendet wird.

9. Verfahren nach Anspruch 8,
**dadurch gekennzeichnet,**
**dass** der erste und zweite Statorkörper (2) unterschiedliche Längen in Axialrichtung des Stators (1) aufweisen.

## Claims

1. Stator for an electric machine (30) having a stator body (2) with a plurality of grooves (4) distributed in the circumferential direction of the stator body (2), and a hairpin winding (5) applied to the stator body (2) and having conductors (32) for a plurality of phases (6), wherein the conductors (32) are each formed by a plurality of conductively connected conductor clips (9-12) which each have two groove portions (15, 16) which are connected by a connecting portion (17), wherein a respective pole (22, 23, 27, 28) of the respective phase (6) is formed by a plurality of groove portion groups (20, 21) each comprising groove portions (15, 16) arranged in a groove group (18, 19) of mutually adjacent grooves (4) in the same layer of the hairpin winding (5), wherein the conductor clips (9-12) which form the groove portions (15, 16) of the respective groove portion group (20, 21) form a conductor clip group which connects adjacent poles (22, 23, 27, 28) of the respective phase (6), in that the connecting portions (17) of the conductor clips (9-12) in each case connect groove portions (15, 16) which connect groove portion groups (20, 21) of adjacent poles (22, 23, 27, 28) of the respective phase (6), wherein between the groove portions (15, 16) of the respective conductor clip (9-12) there is in the circumferential direction a number of skipped grooves (4) which is specified by a skip width (24-26) defined by the clip shape of the respective conductor clip (9-12), wherein at least two of the conductor clip groups of the respective phase (6) have a different variation or combination of the skip widths (24, 25, 26) of the conductor clips (9-12) of the respective conductor clip group,
**characterised in that**
at least one conductor (32) of at least one phase within a basket of the hairpin winding (5) formed by two layers (A, B) of the hairpin winding (5) in the circumferential direction of the stator (1) is routed twice in the same direction around a central axis of the stator (1).

2. Stator according to claim 1,
**characterised in that**
only those selected conductor clip groups which connect exactly two or exactly three of the poles (20, 21, 27, 28) of the respective phase (6) have a different variation or combination of skip widths (24-26) than the other of the conductor clip groups of this phase (6).

3. Stator according to claim 2,
**characterised in that**
all conductor clips (10, 12) of the selected conductor clip groups have the same skip width (26) and the skip widths (24, 25) of two conductor clips (9, 11) of the other conductor clip groups in each case differ by two, or vice versa.

4. Stator according to claim 2, wherein the respective conductor clip group comprises at least three conductor clips (9-12) in each case,
**characterised in that**
the skip width (24-26) of two conductor clips (9-12) of the selected conductor clip groups differs by four or more, and the skip widths (24-26) of the conductor clips (9-12) of the other conductor clip groups differ by a maximum of three, or vice versa.

5. Electric machine, in particular a drive motor for a motor vehicle (29),
**characterised in that**
it comprises a stator (1) according to any one of the preceding claims.

6. Motor vehicle
**characterised in that**
it comprises an electric machine (30) according to claim 5.

7. Method for applying a hairpin winding (5) to a stator body (2) having conductors (32) for a plurality of phases (6) in the course of producing an electric machine (30), comprising the steps of:
- providing a stator body (2) with a plurality of grooves (4) distributed in the circumferential direction of the stator body (2) and a plurality of conductor clips (9-12), each having two groove portions (15, 16) which are connected by a connecting portion (17), wherein at least two of the conductor clips (9-12) have a different clip shape from one another,
- axially inserting the groove portions (15, 16) into the grooves (4) such that a respective pole (22, 23, 27, 28) of the respective phase (6) is formed by a plurality of groove portion groups (20, 21) each comprising groove portions (15, 16) arranged in a groove group (18, 19) of mutually adjacent grooves (4) in the same layer of the hairpin winding (5), wherein the conductor clips (9-12) which form the groove portions (15, 16) of the respective groove portion group (20, 21) form a conductor clip group which connects adjacent poles (22, 23, 27, 28) of the respective phase (6), in that the connecting portions (17) of the conductor clips (9-12) in each case connect groove portions (15, 16) which connect groove portion groups (20, 21) of adjacent poles (22, 23, 27, 28) of the respective phase (6), wherein between the groove portions (15, 16) of the respective conductor clip (9-12) there is in the circumferential direction a number of skipped grooves (4) which is specified by a skip width (24-26) defined by the clip shape of the respective conductor clip (9-12), wherein a different variation or combination of the skip widths (24-26) of the conductor clips (9-12) of the respective conductor clip group is used for at least two of the conductor clip groups of the respective phase (6), and
- conductively connecting the conductor clips (9-12) to form the at least one conductor (32) of the respective phase (6), so that at least one conductor (32) of at least one phase within a basket of the hairpin winding (5) formed by two layers (A, B) of the hairpin winding (5) in the circumferential direction of the stator (1) is routed twice in the same direction around a central axis of the stator (1).

8. Method according to claim 7,
**characterised in that**
the method steps are repeated after applying a first hairpin winding (5) to a first stator body (2) in order to apply a second hairpin winding to a second stator body, but the step of axially inserting the groove portions (15, 16) into the grooves (4) in order to apply the second hairpin winding is modified in such a way that a different variation or combination of skip widths (24-26) is used for at least one of the conductor clip groups of the respective phase (6) than is used for the first hairpin winding (5) and/or **in that** the same variation or combination of skip widths (24-26) is used for all conductor clip groups of the respective phase (6) in the further hairpin winding.

9. Method according to claim 8,
**characterised in that**
the first and second stator bodies (2) have different lengths in the axial direction of the stator (1).

## Revendications

1. Stator pour une machine électrique (30) ayant un corps de stator (2) avec plusieurs rainures (4) réparties dans la direction périphérique du corps de stator (2) et un enroulement en épingle à cheveux (5) appliqué sur le corps de stator (2) avec des conducteurs (32) pour plusieurs phases (6), dans lequel les conducteurs (32) sont formés respectivement par plusieurs pinces conductrices (9-12) qui sont reliées de manière conductrice et présentent chacune deux sections de rainure (15, 16) qui sont connectées par une section de connexion (17), dans lequel un pôle respectif (22, 23, 27, 28) de la phase respective (6) est formé par plusieurs groupes de sections de rainure (20, 21) qui comprennent respectivement des sections de rainure (15, 16) qui sont disposées dans un groupe de rainures (18, 19) de rainures (4) mutuellement adjacentes dans la même position que celle de l'enroulement en épingle à cheveux (5), les pinces conductrices (9-12) formant les sections de rainure (15, 16) du groupe de sections de rainure respectif (20, 21), forment un groupe de pinces conductrices qui relie des pôles adjacents (22, 23, 27, 28) de la phase respective (6), en ce que les sections de connexion (17) des pinces conductrices (9-12) relient chacune des sections de rainure (15, 16), qui appartiennent à des groupes de sections de rainure (20, 21) des pôles adjacents (22, 23, 27, 28) de la phase respective (6), dans lequel entre les sections de rainure (15, 16) de chaque pince conductrice (9-12) dans la direction périphérique repose un nombre de rainures sautées (4), qui est prédéfini par une largeur de saut (24-26) définie par la forme de pince de la pince conductrice respective (9-12), dans lequel au moins deux des groupes de pinces conductrices de la phase respective (6) présentent une variation différente de l'une à l'autre ou une combinaison des largeurs de saut (24, 25, 26) des pinces conductrices (9-12) du groupe de pinces conductrices respectif.
**caractérisé en ce que**
au moins un conducteur (32) d'au moins une phase à l'intérieur d'un panier de l'enroulement en épingle à cheveux (5) formé par deux couches (A, B) de l'enroulement en épingle à cheveux (5) dans la direction périphérique du stator (1) est guidé deux fois dans la même direction autour d'un axe central du stator (1).

2. Stator selon la revendication 1,
**caractérisé en ce que**
exclusivement ces groupes de pinces conductrices sélectionnés qui relient exactement deux ou exactement trois des pôles (20, 21, 27, 28) de la phase respective (6) présentent une autre variation ou combinaison de largeurs de saut (24-26) différente de celles des groupes de pinces conductrices de cette phase (6).

3. Stator selon la revendication 2,
**caractérisé en ce que**
toutes les pinces conductrices (10, 12) des groupes de pinces conductrices sélectionnés présentent la même largeur de saut (26) et les largeurs de saut (24, 25) de chacune des deux pinces conductrices (9, 11) des autres groupes de pinces conductrices diffèrent de deux ou vice versa.

4. Stator selon la revendication 2, dans lequel le groupe de pinces conductrices respectif comprend respectivement au moins trois pinces conductrices (9-12),
**caractérisé en ce que**
la largeur de saut (24-26) de deux pinces conductrices (9-12) des groupes de pinces conductrices sélectionnés diffère de quatre ou plus et les largeurs de saut (24-26) des pinces conductrices (9-12) des autres groupes de pinces conductrices diffèrent de trois au maximum ou vice versa.

5. Machine électrique, en particulier moteur d'entraînement pour un véhicule automobile (29),
**caractérisé en ce qu'**elle
comprend un stator (1) selon l'une des revendications précédentes.

6. Véhicule automobile,
**caractérisé en ce qu'**il
comprend une machine électrique (30) selon la revendication 5.

7. Procédé d'application d'un enroulement en épingle à cheveux (5) sur un corps de stator (2) avec des conducteurs (32) pour plusieurs phases (6) dans le cadre de la fabrication d'une machine électrique (30), comprenant les étapes suivantes :
- fourniture d'un corps de stator (2) avec plusieurs rainures (4) réparties dans la direction périphérique du corps de stator (2), et de plusieurs pinces conductrices (9-12) présentant chacune deux sections de rainure (15, 16), qui sont reliées par une section de connexion (17), au moins deux des pinces conductrices (9-12) présentant une forme de pince différente entre elles,
- introduction axiale des sections de rainure (15, 16) dans les rainures (4) de telle sorte qu'un pôle respectif (22, 23, 27, 28) de la phase respective (6) est formé par plusieurs groupes de sections de rainure (20, 21), comprend respectivement les sections de rainure (15, 16) qui sont disposées dans un groupe de rainures (18, 19) de rainures (4) mutuellement adjacentes dans la même position que celle de l'enroulement en épingle à cheveux (5), les pinces conductrices (9-12) formant les sections de rainure (15, 16) du groupe de sections de rainure respectif (20, 21), forment un groupe de pinces conductrices qui relie des pôles adjacents (22, 23, 27, 28) de la phase respective (6), en ce que les sections de connexion (17) des pinces conductrices (9-12) relient chacune des sections de rainure (15, 16), qui appartiennent à des groupes de sections de rainure (20, 21) des pôles adjacents (22, 23, 27, 28) de la phase respective (6), dans lequel entre les sections de rainure (15, 16) de chaque pince conductrice (9-12) dans la direction périphérique repose un nombre de rainures sautées (4), qui est prédéfini par une largeur de saut (24-26) définie par la forme de pince de la pince conductrice respective (9-12), dans lequel pour au moins deux des groupes de pinces conductrices de la phase respective (6) une variation différente de l'une à l'autre ou une combinaison des largeurs de saut (24-26) des pinces conductrices (9-12) de chaque groupe de pinces conductrices est utilisée, et
- Connexion conductrice des pinces conductrices (9-12) pour la formation d'au moins un conducteur (32) de la phase respective (6), de sorte qu'au moins un conducteur (32) d'au moins une phase à l'intérieur d'un panier de l'enroulement en épingle à cheveux (5) formé par deux couches (A, B) de l'enroulement en épingle à cheveux (5) dans la direction périphérique du stator (1) est guidé deux fois dans la même direction autour d'un axe central du stator (1).

8. Procédé selon la revendication 7,
**caractérisé en ce que**
les étapes de procédé après l'application d'un premier enroulement en épingle à cheveux (5) sur un premier corps de stator (2) sont répétées pour l'application d'un second enroulement en épingle à cheveux sur un second corps de stator, dans lequel toutefois l'étape d'introduction axiale des sections de rainure (15, 16) dans les rainures (4) est modifiée pour l'application du second enroulement en épingle à cheveux de telle sorte que, pour au moins un des groupes de pinces conductrices de la phase respective (6), une autre variation ou combinaison de largeurs de saut (24-26) est utilisée différente de celle utilisée pour le premier enroulement en épingle à cheveux (5) et/ou de telle sorte que pour tous les groupes de pinces conductrices de la phase respective (6) dans l'autre enroulement en épingle à cheveux la même variation ou combinaison de largeurs de saut (24-26) est utilisée.

9. Procédé selon la revendication 8,
**caractérisé en ce que**
les premier et second corps de stator (2) présentent différentes longueurs dans la direction axiale du stator (1).
